# FASCICULE DE BREVET EUROPEEN

(11) **EP 1 967 316 B1**
(45) Date de publication et mention de la délivrance du brevet: **06.05.2009**
(21) Numéro de dépôt: 08305032.8
(22) Date de dépôt: 26.02.2008
(51) Int. Cl.: B23K 26/04

(54) **Installation et procédé de contrôle du centrage d'un faisceau laser passant au travers d'une buse laser**
Vorrichtung und Verfahren zur Steuerung der Zentrierung eines durch eine Laserdüse verlaufenden Laserstrahls
Installation and process for controlling the centering of a laser beam passing through a laser nozzle

(30) Priorité: 05.03.2007 FR 0753635
(43) Date de publication de la demande: 10.09.2008
(73) Titulaire: AIR LIQUIDE WELDING FRANCE, 75007 Paris (FR)
(72) Inventeur: Danhiez, Boris, 79200 Saurais (FR)
(74) Mandataire: Pittis, Olivier

(56) Documents cités:
- EP-A- 1 561 538

## Description

La présente invention concerne un procédé selon le préambule de la revendication 9 et une installation selon le préambule de la revendication 1, comportant un dispositif permettant de contrôler rapidement et automatiquement le centrage correct d'une buse laser d'une installation d'usinage par faisceau laser, en particulier une installation de découpage par faisceau laser. Le document EP-A-1561538 décrit un tel procédé et une telle installation.

La découpe thermique de matériaux métalliques ou autres par une machine automatique de découpe au laser requiert un apport d'énergie optique et l'emploi de gaz d'assistance, tel de l'oxygène, de l'azote ou leurs mélanges.

Ces gaz d'assistance servent à apporter de l'énergie thermique ou cinétique au procédé de coupage et/ou à expulser la matière en fusion hors de la saignée de coupe.

Les matériaux à découper peuvent être, selon le cas, plats, tels des tôles ou des plaques, à symétrie de révolution, tels des tubes, des cônes.., ou de géométries complexes, notamment des formes 3D, tels des profilés...

Ceci implique l'utilisation de machines de coupage de types :
- à interpolation dans un plan : machine à 2 axes (X-Y) et un axe de gestion de la hauteur de l'outil par rapport à la pièce à usiner.
- à interpolation dans l'espace : machine à 5 axes.

L'outil de coupage laser appelé « tête de coupe » peut s'intégrer sur ces deux types machine.

Il comprend habituellement une chambre d'injection de gaz d'assistance dans laquelle un faisceau laser est focalisé, par des moyens de focalisation, tels que lentilles, miroirs ou analogues. Le faisceau laser ainsi focalisé et le gaz d'assistance sortent de la tête de coupe par l'intermédiaire d'une buse laser munie d'un orifice central.

Pour réaliser une pièce aux contours complexes, il est nécessaire de lui appliquer un usinage par procédé laser comportant une succession de perçages et de coupages par exemple.

Lors des opérations de perçage par faisceau laser, une série de « tirs laser » avec un jeu de paramètres prédéfinis en accord avec l'épaisseur et le type de matière à usiner, est appliquée à l'ensemble des périphériques de la machine.

Dans tous les cas, la buse laser sert à concentrer le gaz d'assistance du faisceau laser et ainsi à permettre, lors d'un coupage laser par exemple, une expulsion du métal fondu hors de la saignée de coupe.

Afin de réaliser une pièce aux contours complexes, un usinage par procédé laser consistant en une succession de phases de perçage et de coupage, est appliqué.

Du fait de la nécessité d'usinage multidirectionnel, typiquement suivant 2 axes X/Y pour des pièces planes ou suivant 5 axes pour des pièces en 3D, la machine de coupage laser doit pouvoir offrir le même niveau de performances quelle que soit la direction et quel que soit le sens de contournage.

D'autre part, un décentrage du faisceau par rapport à la buse peut détériorer la buse de découpe et ainsi engendrer des défauts de coupe.

Or, le décentrage du faisceau laser de puissance dans la buse de découpe peut avoir deux causes, à savoir :
- le faisceau et donc la lentille de focalisation ont bougé par rapport à l'axe vertical passant par le centre de la buse, c'est-à-dire le centre de l'ouverture inférieure ou orifice de sortie de la buse,
- la buse a subi une collision ou une usure selon une direction privilégiée entraînant un décalage du centre de son ouverture inférieure ou orifice de sortie par rapport à sa position initiale.

De là, il est nécessaire qu'un opérateur vienne régulièrement contrôler visuellement le centrage de la buse et s'assurer que celle-ci n'est pas décentrée par rapport à l'axe du faisceau laser, ce qui est une opération fastidieuse à réaliser car elle nécessite l'intrusion de l'opérateur dans la zone d'usinage et l'interruption par l'opérateur du cycle d'usinage pour contrôler le centrage du faisceau laser dans la buse de découpe.

Ceci est donc coûteux en temps, en main d'oeuvre et engendre potentiellement un risque d'exposition de l'opérateur au faisceau laser.

Or, la généralisation d'installations de coupage laser automatiques vise à réduire l'intervention humaine lors des opérations d'usinage par laser.

De là, on comprend aisément que devoir recouvrir à un opérateur pour contrôler l'état de la buse d'une installation automatisée n'est absolument pas pratique, voire dangereux, et est pénalisant pour la productivité du procédé d'usinage laser mis en oeuvre.

La présente invention vise donc à proposer un procédé et une installation d'usinage par faisceau laser améliorés et automatisés, ne présentant pas les problèmes et inconvénients susmentionnés et qui permettent de réaliser un contrôle efficace, sécuritaire, rapide et automatisé du centrage de la buse laser équipant ladite installation laser et/ou utilisée lors de la mise en oeuvre dudit procédé.

Une solution est alors une installation d'usinage par faisceau laser, en particulier de coupage laser, comprenant une tête d'usinage comprenant une buse munie d'un orifice de sortie central permettant le passage du faisceau laser d'usinage, comportant un système de détermination du positionnement relatif de la buse par rapport à l'axe A-A dudit faisceau laser comprenant :
- des moyens d'activation d'un faisceau laser d'alignement aptes à et conçus pour activer un faisceau laser d'alignement traversant l'orifice de ladite buse,
- des moyens d'acquisition d'images agencés de manière à permettre d'acquérir au moins une image de la région externe de la buse au niveau de l'orifice de sortie de ladite buse, avant et après, activation d'un faisceau laser d'alignement par lesdits moyens d'activation de faisceau laser d'alignement et passage dudit faisceau au travers de l'orifice de la buse,
- des moyens de traitement et d'analyse d'images aptes et conçus pour traiter les images acquises par les moyens d'acquisition, avant et après activation du faisceau d'alignement et passage dudit faisceau au travers de l'orifice de la buse, et pour comparer lesdites images traitées avant et après activation du faisceau d'alignement et en déduire le positionnement relatif de la buse par rapport à l'axe A-A du faisceau laser, en particulier un centrage correct ou un décentrage de la buse par rapport à l'axe A-A du faisceau laser.

Selon le cas, l'installation de l'invention peut comprendre l'une ou plusieurs des caractéristiques suivantes :
- les moyens d'acquisition d'image comprennent une caméra vidéo, de préférence une caméra (2) équipée d'un ou plusieurs filtres optiques et/ou à obturateur mécanique.
- les moyens d'activation de faisceau laser d'alignement sont aptes à et conçus pour activer un faisceau laser d'alignement, ledit faisceau étant envoyé ensuite au travers de l'orifice de la buse en direction des moyens d'acquisition d'images et au travers de l'obturateur équipant lesdits moyens d'acquisition d'images, encore appelés système de vision industrielle.
- elle comporte des moyens d'éclairage agencés de manière à permettre un éclairage, direct ou indirect, d'au moins la partie de la buse portant l'orifice.
- elle comporte, en outre, des moyens de mémorisation permettant de mémoriser une ou des images.
- elle comporte des moyens d'affichage permettant un affichage de ou des images acquises, avant et/ou après traitement.
- les moyens de traitement, les moyens de comparaison et/ou les moyens de mémorisation sont incorporés dans un ordinateur et/ou dans une carte électronique d'acquisition et/ou de traitement incorporée ou non aux moyens d'acquisition d'images.
- elle comporte des moyens de comptabilisation de tirs laser aptes à et conçus pour comptabiliser le nombre et/ou la durée de tirs laser opérés avec une buse donnée et des moyens de pilotage aptes à et conçus pour interagir avec au moins les moyens d'acquisition d'image, lorsque les moyens de comptabilisation de tirs déterminent qu'un nombre-seuil et/ou durée seuil de tirs a été atteint ou dépassé.
- les moyens d'analyse d'image sont conçus pour et aptes à analyser une zone déterminée et délimitée située autour de l'orifice central de sortie de la buse, en particulier une zone ou région de forme circulaire ou en forme de couronne.

L'invention porte aussi sur un procédé de détermination du positionnement relatif d'une buse laser par rapport à l'axe A-A d'un faisceau laser traversant ladite buse, ladite buse étant munie d'un orifice de sortie central pour le passage dudit faisceau laser d'usinage et équipant une tête d'usinage d'une installation d'usinage par faisceau laser, en particulier une installation de coupage ou soudage laser notamment selon l'invention, dans lequel :
a) on acquiert au moins une première image de la région externe de la buse au niveau de l'orifice de sortie de ladite buse, en l'absence de tout faisceau laser traversant l'orifice buse,
b) on fait passer un faisceau laser d'alignement au travers de l'orifice de buse, ledit faisceau laser d'alignement étant de puissance plus faible que le faisceau laser d'usinage mais coaxial audit faisceau laser d'usinage,
c) on acquiert au moins une deuxième image de la région externe de la buse au niveau de l'orifice de sortie de ladite buse et d'un spot laser obtenu au moyen dudit faisceau laser d'alignement traversant l'orifice de buse lors de l'acquisition d'image,
d) on traite au moins les première et deuxième images acquises aux étapes a) et c) de manière à déterminer une ou plusieurs caractéristiques géométriques représentatives de la position relative de la buse, notamment caractérisée par la couronne délimitant l'orifice, par rapport à celle du spot laser,
e) on compare la ou les caractéristiques géométriques représentatives de la position relative de la buse à celles représentatives de la position du spot laser,
f) on déduit de l'étape e) une information de positionnement relatif de la buse par rapport au faisceau laser d'axe A-A traversant l'orifice de ladite buse, dans un plan horizontal et selon un axe vertical passant par le centre de la buse, ledit axe vertical étant perpendiculaire audit plan horizontal.

Selon le cas, le procédé de l'invention peut comprendre l'une ou plusieurs des caractéristiques suivantes :
- à l'étape e), au moins une caractéristique géométrique est choisie parmi les diamètres de spot laser et de buse ou d'orifice de buse, les centres du spot laser et d'orifice de buse, ou les surfaces de spot laser et de buse ou d'orifice de buse, de préférence les centres du spot laser et d'orifice de buse.
- à l'étape f), on détermine que la buse est centrée par rapport à l'axe A-A du faisceau laser traversant ladite buse lorsque les centres du spot laser et d'orifice de buse sont confondus, à un paramètre de tolérance près inclus dans une base de données, ce paramètre dépendant ou non du couple matière/épaisseur. La base de données peut être mémorisée soit sur l'électronique embarquée du système de vision ou dans l'électronique d'acquisition/traitement ou encore dans l'ordinateur.
- à l'étape f), on détermine que la buse est n'est pas centrée par rapport à l'axe A-A au faisceau laser traversant ladite buse, en particulier lorsque les centres du spot laser et d'orifice de buse sont distincts, on opère un recentrage relatif de la buse par rapport à l'axe du laser, de préférence de façon automatique, et/ou on avertit l'opérateur.
- on comptabilise le nombre et/ou la durée de tirs laser réalisés au moyen de la buse laser et on débute l'étape a), lorsque le nombre et/ou la durée de tirs laser réalisés atteint ou dépasse un nombre et/ou une durée seuil de tirs laser donné.
- il comporte une étape d'affichage d'au moins une image de la région de l'orifice de buse sur un écran de visualisation et/ou un compte rendu de contrôle comportant le résultat de l'analyse sus décrite.

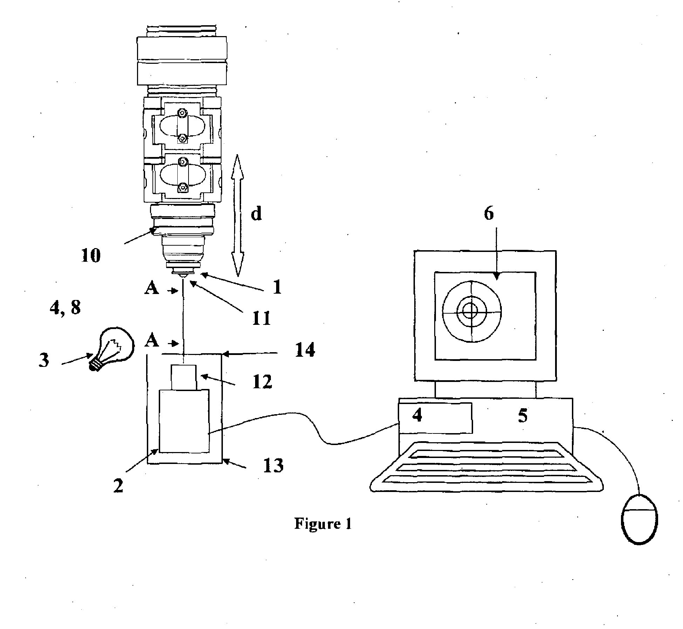

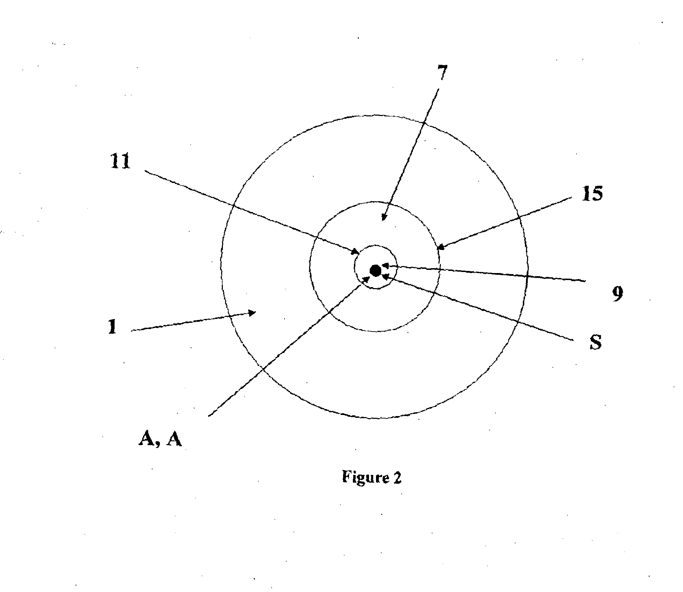

Le schéma de principe d'un mode de réalisation de l'invention est illustré sur les Figures 1 et 2.

Afin d'éviter l'intrusion de l'opérateur dans la zone d'usinage et la mise en place de procédures fastidieuses par celui-ci dans le but de contrôler visuellement le centrage des buses, le système proposé par l'invention repose sur un appareillage de détection optique du défaut de centrage par acquisition de l'image de la buse 1 montée sur la tête laser 10 de la machine de coupage ou analogue, et en sa caractérisation par un algorithme d'analyse, avant et après passage d'un faisceau laser d'alignement 4 dans ladite buse 1.

Le système de l'invention se compose d'une source optique 3, de préférence à symétrie de révolution autour de l'axe vertical passant par le centre de la caméra 2, permettant l'éclairage de la région inférieure de la buse 1 portant l'orifice 11 de sortie de faisceau laser et équipant la tête laser 10, d'une caméra 2 munie de filtres optiques adaptés, d'un objectif de focalisation 12, d'un support 13 permettant la vision directe de la buse 1 au travers d'un obturateur 14, d'une carte d'acquisition vidéo 4 intégrée dans un ordinateur 5 ou directement dans la caméra 2, et d'une interface homme-machine déportée 6 permettant l'affichage du résultat du contrôle automatique, en particulier cette interface comprend un écran de visualisation 6, par exemple le moniteur de l'ordinateur 5.

Lors d'opérations d'usinage, la machine comptabilise de façon autonome, le nombre de perçages, de contours, de pièces ou de tôles effectués au moyen d'une buse laser donnée. Ces différentes phases d'usinage sont comptabilisées de façon incrémentielle.

Comme détaillé ci-après, sur dépassement d'une valeur-seuil d'incréments dépendant par exemple du couple matière/épaisseur en cours d'usinage, l'outil de coupe est déplacé vers le système de contrôle visuel du centrage de buse 1 afin de déterminer si cette dernière est correctement centrée ou non par rapport à l'axe du faisceau laser 8 d'usinage, et peut continuer à remplir pleinement sa fonction.

Toutefois, l'opération de contrôle de centrage peut aussi être effectuée lorsque l'opérateur le désire même si la valeur-seuil susmentionnée n'a pas été atteinte ou, à l'inverse, a été dépassée alors que la machine n'était pas configurée pour réaliser cette tâche de façon automatique.

Le déclenchement d'un cycle de contrôle de centrage peut aussi se faire sur d'autres types de paramètres, comme par exemple de façon périodique, la période ou fréquence de contrôle dépendant également du couple matière/épaisseur, du type de montage de la lentille de focalisation, du type de buse et de son montage sur la tête de coupe.

Une fois la tête laser 10 placé en vis-à-vis du système de contrôle, la source optique 3, telle une lampe ou un anneau formé de diodes lumineuses ou LEDS, éclaire la face inférieure avec l'orifice 11 de la buse 1 afin de permettre l'acquisition vidéo de la région externe portant l'orifice 11 de la buse, c'est-à-dire la prise d'une ou plusieurs images de cette région de la buse 1, comme illustré sur les Figures 1 et 2, et ce, en l'absence puis en présence d'un faisceau laser 4 d'alignement traversant la buse 1. Un système d'obturateur amovible, piloté par l'ordinateur 5 ou la commande numérique de la machine de coupage laser, sert à protéger les optiques de focalisation 12 ainsi que le filtre optique et permet l'acquisition en position fermée d'une image noire. Cette acquisition autorise la calibration du système d'échantillonnage par seuil de niveaux de gris.

Dans le même temps, un faisceau laser d'alignement 4, différent du faisceau laser d'usinage 8 par sa longueur d'onde et sa puissance mais identique par son sens et sa direction de propagation, est activé pour réaliser l'acquisition vidéo du spot 9 (i.e. une tâche laser) obtenu sur la caméra 2 au travers de l'orifice 11 de la buse 1.

Le faisceau laser 4 d'alignement est un faisceau parfaitement coaxial au faisceau de puissance 8 servant à l'usinage thermique mais possédant une longueur d'onde dans le domaine visible et une puissance autorisant la vision directe pendant plusieurs minutes par le système d'analyse sans dommage de ce dernier, donc une puissance moindre que celle du faisceau laser d'usinage. Le faisceau laser 4 d'alignement et le faisceau laser 4 d'usinage sont donc de même axe A-A et traversent tous les deux la buse 1 via son orifice 11.

Ce système nécessite une calibration de colinéarité des ces deux faisceaux susmentionnés par une méthode classique, manuelle ou semi-automatique de perforation d'un substrat portant l'empreinte de l'orifice 11 de la buse 1 au moyen d'un tir de puissance par le faisceau 4 suivi de la superposition du spot du faisceau d'alignement 8 sur le trou précédemment créé sur le substrat.

Ce faisceau laser 4 d'alignement est obtenu par superposition d'une source laser de faible puissance sur le chemin optique du faisceau de puissance par de fabricant de la source laser de puissance.

Les images ainsi obtenues sont alors traitées et analysées, c'est-à-dire analysées afin d'en extraire et/ou en isoler une ou plusieurs caractéristiques géométriques, tels que cercles, anneaux, centres... par une méthode de traitement d'images classique adaptée, en particulier par échantillonnage de pixels et/ou calculs de barycentres.

Les images peuvent également être mémorisées. Les moyens de mémorisation de ces images peuvent être tout dispositif de stockage d'informations apte à stocker des données, tel que la mémoire d'un ordinateur, des cartes mémoires, etc....

Les centres respectifs de l'orifice 11 de sortie de buse ou de toute autre partie géométrique concentrique au dit orifice 11, et du spot laser d'alignement sont alors comparés par l'algorithme d'analyse. Cet algorithme peut soit être inclus dans une carte d'acquisition vidéo du système d'acquisition lui-même ou déporté sur un autre système électronique, comme par exemple la commande numérique d'une machine de coupage ou soudage.

Dans l'hypothèse où les centres déterminés par l'analyse précédente ne coïncideraient pas, l'automate de la machine peut soit interrompre le cycle d'usinage et alerter l'opérateur, soit déclencher une routine autonome de réglage, c'est-à-dire de centrage de la buse, via des actionneurs autorisant le repositionnement relatif du faisceau laser vis-à-vis de la buse de découpe, ou encore dégrader les performances de coupe de l'installation.

Dans le cas contraire, en l'absence de défaut, le cycle d'usinage peut reprendre automatiquement là où il s'était arrêté, sans action de l'opérateur.

Par "dégradation des performances de coupe", on entend pouvoir diminuer la vitesse de contournage des pièces à couper mais aussi la modification de tout ou partie des paramètres de coupe, tel que puissance laser, fréquence de tir, pression de gaz, hauteur de coupe...

Dans le cas d'une machine de coupage qui ne serait pas équipée d'un système de centrage automatique du faisceau laser au travers de la buse, la qualité de coupe pourrait tout de même être atteinte en dégradant les performances de coupe, dès lors que ce défaut de centrage aurait été détecté et quantifié afin de pouvoir asservir la dégradation des performances en fonction du décentrage.

De même, lors de cette acquisition de l'image du « fond » de buse 1, la surface de l'anneau ou couronne caractérisé par le traitement d'images peut être comparée à une surface nominale. En effet, la partie basse externe de la buse ou couronne 7 de buse joue le rôle de capteur capacitif. Les "plaques" d'un condensateur formées par cette couronne 7 de cuivre et la tôle de métal conducteur déterminent une capacité variable en fonction de la distance qui les sépare, distance buse/pièce.

Or, si la surface mesurée n'est pas la même que la surface nominale garantissant une distance buse/pièce constante durant le processus d'usinage par procédé laser, le système de vision objet de l'invention peut alors « avertir » le reste de l'installation afin d'ajuster les paramètres d'usinage en fonction de la nouvelle hauteur ou lancer automatiquement une routine permettant de calibrer le système de mesure capacitif. Le cas d'un décentrage buse/faisceau laser dû à une détérioration de la buse est ainsi pris en compte par ce système.

En fait, le positionnement de l'orifice 11 de la buse vis-à-vis de la caméra 2 n'est pas nécessairement précis et répétitif, on peut avoir une tolérance de l'ordre de -/+ 25% du diamètre externe de la couronne 7. Ceci implique qu'il n'est pas nécessaire de venir avec l'outil d'usinage en butée sur le support 13 du système de vision 2 afin de référencer le centre 11 de la buse 1 par rapport au centre de la fenêtre d'acquisition de la caméra 2.

A partir de l'image obtenu en a), on isole la caractéristique de surface de la couronne 7 entourant l'orifice 11 de la buse 1 afin de la comparer à celle initialement prévue au lancement d'un programme d'usinage automatique par procédé laser.

Les caractéristiques de surfaces nominales peuvent être mémorisés dans une base de données dépendant du couple matière/épaisseur devant être usiné.

A partir du résultat de la comparaison effectuée, l'installation d'usinage peut opérer en cas d'écart trop important entre la surface mesurée et la surface nominale de la couronne 7, à une dégradation des performances d'usinage ou à un changement automatique de la buse 1 ou à défaut l'affichage du défaut à l'écran 6.

En particulier, à partir des images obtenues, on peut isoler la caractéristique de surface S du faisceau d'alignement 4 au niveau de l'orifice 11, comme montré en figure 2.

En outre, on peut réitérer l'acquisition des images en faisant varier de façon automatique la distance d entre l'élément de focalisation des faisceaux colinéaires 4 et 8, et l'orifice 11 de la buse 1, afin d'établir la loi de variation S = f(d) donnant l'évolution de la surface et/ou du diamètre du faisceau d'alignement 4 au niveau de l'orifice 11 en fonction de la position relative de l'élément de focalisation par rapport à la buse 1.

Ensuite, le système de vision industriel traite et/ou fournit à l'ordinateur 5 les informations obtenues par réitération de l'acquisition des images obtenues à l'étape c) dans le but d'isoler la caractéristique minimale (surface et/ou diamètre) représentative de la localisation du point de focalisation du faisceau 4 au niveau de l'orifice 11.

Le positionnement de l'outil d'usinage 10 vis-à-vis de l'objectif 12 de la caméra 2 est réalisé de façon précis selon un axe verticale colinéaire à l'axe A-A. Ce positionnement pourra être obtenu grâce à un dispositif de mesure capacitive annexe de prise d'origine en hauteur. Le dispositif de prise d'origine de hauteur peut être le même que celui permettant le suivi de hauteur d'usinage entre la couronne 11 de fond de buse 1 et la surface supérieure de la matière à usiner.

D'une manière générale, selon l'invention, on réalise donc une acquisition d'images de la buse 1 traversée et non traversée par un faisceau laser 4 d'alignement, on traite et on analyse les images ainsi acquises et on en déduit une information de positionnement relatif buse/axe du faisceau, en particulier le centre de l'orifice 11 de buse et l'axe A-A du faisceau d'alignement se confondent, alors on en déduit que le centrage de buse est correct.

L'invention présente en outre un avantage important, à savoir que l'opérateur de l'installation d'usinage laser n'a pas besoin d'intervenir manuellement pour opérer le contrôle du centrage de la buse d'usinage puisque ce contrôle se fait automatiquement par acquisition et traitement d'images.

Le rôle de l'opérateur ne se borne qu'à vérifier visuellement sur un écran de contrôle que la buse est bien centrée et à ensuite (présence ou absence de message d'erreur), si besoin est, opérer son recentrage relatif par rapport au faisceau, et ce, manuellement ou automatiquement.

## Revendications

1. Installation d'usinage par faisceau laser comprenant une tête d'usinage (10) comprenant une buse (1) munie d'un orifice (11) de sortie central permettant le passage du faisceau laser d'usinage (8), comportant un système de détermination du positionnement relatif de la buse (1) par rapport à l'axe (A-A) dudit faisceau laser comprenant :
- des moyens d'activation d'un faisceau laser d'alignement (4) aptes à et conçus pour activer un faisceau laser d'alignement traversant l'orifice (11) de ladite buse (1),
**caractérisée en ce qu'**elle comprend:
- des moyens d'acquisition d'images agencés de manière à permettre d'acquérir au moins une image de la région externe de la buse (1) au niveau de l'orifice (11) de sortie de ladite buse (1), avant et après, activation d'un faisceau laser d'alignement (4) par lesdits moyens d'activation de faisceau laser d'alignement et passage dudit faisceau au travers de l'orifice (11) de la buse (1),
- des moyens de traitement et d'analyse d'images aptes et conçus pour traiter les images acquises par les moyens d'acquisition, avant et après activation du faisceau d'alignement (4) et passage dudit faisceau (4) au travers de l'orifice (11) de la buse, et pour comparer lesdites images traitées avant et après activation du faisceau (4) d'alignement et en déduire le positionnement relatif de la buse (1) par rapport à l'axe (A-A) du faisceau laser (4, 8), en particulier un centrage correct ou un décentrage de la buse (1) par rapport à l'axe (A-A) du faisceau laser.

2. Installation selon la revendication 1, **caractérisée en ce que** les moyens d'acquisition d'image comprennent une caméra (2) vidéo, de préférence une caméra (2) équipée d'un ou plusieurs filtres optiques et/ou à obturateur mécanique (14).

3. Installation selon la revendication 1 ou 2, **caractérisée en ce qu'**elle comporte des moyens d'éclairage (3) agencés de manière à permettre un éclairage d'au moins la partie de la buse (1) portant l'orifice (11).

4. Installation selon les revendications 1 à 3, **caractérisée en ce qu'**elle comporte, en outre, des moyens de mémorisation permettant de mémoriser une ou des images.

5. Installation selon les revendications 1 à 4, **caractérisée en ce qu'**elle comporte des moyens d'affichage (6) permettant un affichage de ou des images acquises, avant et/ou après traitement.

6. Installation selon les revendications 1 à 5, **caractérisée en ce que** les moyens de traitement, les moyens de comparaison et/ou les moyens de mémorisation sont incorporés dans un ordinateur (5) et/ou dans une carte électronique d'acquisition et/ou de traitement (4).

7. Installation selon les revendications 1 à 6, **caractérisée en ce qu'**elle comporte des moyens de comptabilisation de tirs laser aptes à et conçus pour comptabiliser le nombre a été atteint et/ou la durée de tirs laser opérés avec une buse (1) donnée et des moyens de pilotage aptes à et conçus pour interagir avec au moins les moyens d'acquisition d'image, lorsque les moyens de comptabilisation de tirs déterminent qu'un nombre-seuil et/ou durée seuil de tirs ou dépassé.

8. Installation selon les revendications 1 à 7, **caractérisée en ce que** les moyens d'analyse d'image sont conçus pour et aptes à analyser une zone (7) déterminée et délimitée située autour de l'orifice (11) central de sortie de la buse (1), en particulier une zone ou région de forme circulaire ou en forme de couronne (7).

9. Procédé de détermination du positionnement relatif d'une buse (1) laser par rapport à l'axe (A-A) d'un faisceau laser traversant ladite buse (1), ladite buse (1) étant munie d'un orifice (11) de sortie central pour le passage dudit faisceau laser d'usinage (8) et équipant une tête d'usinage (10) d'une installation d'usinage par faisceau laser, en particulier une installation de coupage ou soudage laser notamment selon l'une des revendications 1 à 8, dans lequel :
a) on acquiert une image
b) on fait passer un faisceau laser d'alignement au travers de l'orifice (11) de buse (1), ledit faisceau laser d'alignement (4) étant de puissance plus faible que le faisceau laser d'usinage (8) mais coaxial audit faisceau laser d'usinage,
**caractérisé en ce qu'**à l'étape a) on acquiert au moins une première image de la région externe de la buse (1) au niveau de l'orifice (11) de sortie de ladite buse (1), en l'absence de tout faisceau laser traversant l'orifice (11) de buse (1), et **en ce que** dans le procedé:
c) on acquiert au moins une deuxième image de la région externe de la buse (1) au niveau de l'orifice (11) de sortie de ladite buse (1) et d'un spot (9) laser obtenu au moyen dudit faisceau laser d'alignement (4) traversant l'orifice (11) de buse (1) lors de l'acquisition d'image,
d) on traite au moins les première et deuxième images acquises aux étapes a) et c) de manière à déterminer une ou plusieurs caractéristiques géométriques représentatives de la position relative de la buse (1) par rapport à celle du spot (9) laser,
e) on compare la ou les caractéristiques géométriques représentatives de la position relative de la buse (1) à celles représentatives de la position du spot (9) laser, dans un plan horizontal et selon l'axe vertical passant par le centre de la buse (1),
f) on déduit de l'étape e) une information de positionnement relatif de la buse (1) par rapport au faisceau laser (4, 8) d'axe A-A traversant l'orifice (11) de ladite buse (1).

10. Procédé selon la revendication 9, **caractérisé en ce qu'**à l'étape e), au moins une caractéristique géométrique est choisie parmi les diamètres de spot laser (9) et de buse (1) ou d'orifice de buse (11), les centres du spot laser (9) et d'orifice (11) de buse, ou les surfaces de spot laser et de buse ou d'orifice de buse, de préférence les centres du spot laser et d'orifice de buse.

11. Procédé selon l'une des revendications 9 ou 10, **caractérisé en ce qu'**à l'étape f), on détermine que la buse (1) est centrée par rapport à l'axe A-A du faisceau laser traversant ladite buse (1) lorsque les centres du spot laser (9) et d'orifice (11) de buse sont confondus.

12. Procédé selon l'une des revendications 9 à 11, **caractérisé en ce qu'**à l'étape f), on détermine que la buse (1) est n'est pas centrée par rapport à l'axe A-A au faisceau laser (4, 8) traversant ladite buse, en particulier lorsque les centres du spot (9) laser et d'orifice (11) de buse sont distincts, on opère un recentrage relatif de la buse (1) par rapport à l'axe du laser et/ou on avertit l'opérateur.

13. Procédé selon l'une des revendications 9 à 12, **caractérisé en ce qu'**on comptabilise le nombre et/ou la durée de tir laser réalisés au moyen de la buse laser et on débute l'étape a), lorsque le nombre et/ou la durée de tir laser réalisés atteint ou dépasse un nombre et/ou une durée seuil de tir laser donné.

14. Procédé selon l'une des revendications 9 à 13, **caractérisé en ce qu'**il comporte une étape d'affichage d'au moins une image de la région de l'orifice (11) de buse sur un écran (6) de visualisation et/ou d'un compte rendu de contrôle de centrage.

## Claims

1. Laser machining installation comprising a machining head (10) comprising a nozzle (1) provided with a central exit orifice (11) for passage of the laser machining beam (8), which includes a system for determining the relative position of the nozzle (1) with respect to the axis (A-A) of said laser beam, comprising:
- means for activating an alignment laser beam (4) suitable and designed for activating an alignment laser beam passing through the orifice (11) of said nozzle (1),
**characterized in that** it comprises:
- image acquisition means set up so as to acquire at least one image of the external region of the nozzle (1) at the exit orifice (11) of said nozzle (1), before and after an alignment laser beam (4) has been activated by said alignment laser beam activation means and said beam has passed through the orifice (11) of the nozzle (1); and
- image processing/analysis means suitable and designed for processing the images acquired by the acquisition means, before and after the alignment beam (4) has been activated and said beam (4) has passed through the orifice (11) of the nozzle, and for comparing said processed images before and after the alignment beam (4) has been activated and for deducing therefrom the relative position of the nozzle (1) with respect to the axis (A-A) of the laser beam (4, 8), in particular the correct centring or off-centring of the nozzle (1) with respect to the axis (A-A) of the laser beam.

2. Installation according to Claim 1, **characterized in that** the image acquisition means comprise a video camera (2), preferably a camera (2) fitted with one or more optical filters and/or having a mechanical shutter (14).

3. Installation according to Claim 1 or 2, **characterized in that** it includes illumination means (3) arranged so as to illuminate at least that part of the nozzle (1) bearing the orifice (11).

4. Installation according to Claims 1 to 3, **characterized in that** it further includes storage means for storing one or more images in the memory.

5. Installation according to Claims 1 to 4, **characterized in that** it includes display means (6) for displaying the acquired image or images before and/or after processing.

6. Installation according to Claims 1 to 5, **characterized in that** the processing means, the comparison means and/or the storage means are incorporated into a computer (5) and/or into an electronic acquisition and/or processing card (4).

7. Installation according to Claims 1 to 6, **characterized in that** it includes laser shot counting means suitable and designed for counting the number of laser shots that has been reached and/or the duration thereof with a given nozzle (1) and control means suitable and designed for interacting with at least the image acquisition means, when the shot counting means determine that a threshold number and/or threshold duration of shots has been reached or exceeded.

8. Installation according to Claims 1 to 7, **characterized in that** the image analysis means are designed and suitable for analysing a specified and delimited zone (7) located around the central exit orifice (11) of the nozzle (1), in particular a zone or region (7) of circular shape or of ring shape.

9. Method of determining the relative position of a laser nozzle (1) with respect to the axis (A-A) of a laser beam passing through said nozzle (1), said nozzle (1) being provided with a central exit orifice (11) for passage of said laser machining beam (8) and equipping a machining head (10) of a laser machining installation, in particular a laser coupling or welding installation, especially according to one of Claims 1 to 8, in which:
a) an image is acquired;
b) an alignment laser beam is made to pass through the orifice (11) of the nozzle (1), said alignment laser beam (4) being of lower power than the machining laser beam (8) but coaxial with said laser machining beam,
**characterized in that**, in step a), at least a first image of the external region of the nozzle (1) at the exit orifice (11) of said nozzle (1) is acquired in the absence of any laser beam passing through the orifice (11) of the nozzle (1) and **in that**, in the method:
c) at least a second image of the external region of the nozzle (1) at the exit orifice (11) of said nozzle (1) and of a laser spot (9) obtained by means of said alignment laser beam (4) passing through the orifice (11) of the nozzle (1) is acquired during the image acquisition;
d) at least the first and second images acquired at steps a) and c) are processed so as to determine one or more geometric characteristics representative of the relative position of the nozzle (1) with respect to that of the laser spot (9);
e) the geometric characteristic or characteristics representative of the relative position of the nozzle (1) are compared with those representative of the position of the laser spot (9) in a horizontal plane and along the vertical axis passing through the centre of the nozzle (1); and
f) information about the relative position of the nozzle (1) with respect to the laser beam (4, 8) of axis (A-A) passing through the orifice (11) of said nozzle (1) is deduced from step e).

10. Method according to Claim 9, **characterized in that**, in step e), at least one geometric characteristic is chosen from among the diameter of the laser stop (9), the diameter of the nozzle (1) or of the nozzle orifice (11), the centre of the laser spot (9) and the centre of the nozzle orifice (11), or the area of the laser spot and the area of the nozzle or of the nozzle orifice, preferably the centre of the laser spot and the centre of the nozzle orifice.

11. Method according to either of Claims 9 and 10, **characterized in that**, in step f), it is determined that the nozzle (1) is centred with respect to the axis A-A of the laser beam passing through said nozzle (1) when the centres of the laser spot (9) and the nozzle orifice (11) are coincident.

12. Method according to one of Claims 9 to 11, **characterized in that**, in step f), it is determined that the nozzle (1) is not centred with respect to the axis A-A of the laser beam (4, 8) passing through said nozzle, in particular when the centres of the laser spot (9) and the nozzle orifice (11) are different, the nozzle (1) undergoes a relative recentring operation with respect to the axis of the laser and/or the operator is informed.

13. Method according to one of Claims 9 to 12, **characterized in that** the number and/or duration of laser shots produced by means of the laser nozzle are counted and step a) is started when the number and/or duration of laser shots produced reaches or exceeds a given laser shot threshold number and/or duration.

14. Method according to one of Claims 9 to 13, **characterized in that** it includes a step of displaying at least one image of the region of the nozzle orifice (11) on a display screen (6) and/or of displaying a record of the centring check.

## Patentansprüche

1. Vorrichtung zur Laserstrahlbearbeitung, die einen Bearbeitungskopf (10) aufweist, der eine Düse (1) enthält, welche mit einer zentralen Ausgangsöffnung (11) versehen ist, die das Passieren des Bearbeitungslaserstrahls (8) gestattet, umfassend ein System zur Bestimmung der relativen Positionierung der Düse (1) bezüglich der Achse (A-A) des Laserstrahls mit
- Mitteln zur Aktivierung eines Justierlaserstrahls (4), die zur Aktivierung eines die Öffnung (11) der Düse (1) durchquerenden Justierlaserstrahls geeignet und konzipiert sind,
**dadurch gekennzeichnet, dass** sie Folgendes umfasst:
- Mittel zur Erfassung von Bildern, die so angeordnet sind, dass sie gestatten, mindestens ein Bild des äußeren Bereichs der Düse (1) an der Ausgangsöffnung (11) der Düse (1) vor und nach Aktivierung eines Justierlaserstrahls (4) durch die Mittel zur Aktivierung des Justierlaserstrahls und Passieren des Strahls durch die Öffnung (11) der Düse (1) zu erfassen,
- Mittel zur Verarbeitung und Analyse von Bildern, die zur Verarbeitung der durch die Erfassungsmittel erfassten Bilder vor und nach Aktivierung des Justierstrahls (4) und Passieren des Strahls (4) durch die Öffnung (11) der Düse und zum Vergleichen der verarbeiteten Bilder vor und nach Aktivierung des Justierstrahls (4) und dabei Ableiten der relativen Positionierung der Düse (1) bezüglich der Achse (A-A) des Laserstrahls (4, 8), insbesondere eine ordnungsgemäße Zentrierung oder Dezentrierung der Düse (1) bezüglich der Achse (A-A) des Laserstrahls geeignet und konzipiert sind.

2. Vorrichtung nach Anspruch 1, **dadurch gekennzeichnet, dass** die Bilderfassungsmittel eine Videokamera (2), vorzugsweise eine mit einem oder mehreren optischen Filtern und/oder einem mechanischen Verschluss (14) ausgestattete Kamera (2), umfassen.

3. Vorrichtung nach Anspruch 1 oder 2, **dadurch gekennzeichnet, dass** sie Beleuchtungsmittel (3) aufweist, die so angeordnet sind, dass sie ein Beleuchten mindestens des Teils der Düse (1), der die Öffnung (11) trägt, gestatten.

4. Vorrichtung nach den Ansprüchen 1 bis 3, **dadurch gekennzeichnet, dass** sie des Weiteren Speichermittel aufweist, die gestatten, ein oder mehrere Bilder zu speichern.

5. Vorrichtung nach den Ansprüchen 1 bis 4, **dadurch gekennzeichnet, dass** sie Anzeigemittel (6) aufweist, die es gestatten, das oder die erfasste(n) Bild(er) vor und/oder nach der Verarbeitung anzuzeigen.

6. Vorrichtung nach den Ansprüchen 1 bis 5, **dadurch gekennzeichnet, dass** die Verarbeitungsmittel, die Vergleichsmittel und/oder die Speichermittel in einem Rechner (5) und/oder in einer elektronischen Erfassungs- und/oder Verarbeitungskarte (4) eingebaut sind.

7. Vorrichtung nach den Ansprüchen 1 bis 6, **dadurch gekennzeichnet, dass** sie Mittel zum Berechnen von Laserabschüssen, die zum Berechnen der erreichten Anzahl und/oder der Dauer von Laserabschüssen, die mit einer gegebenen Düse (1) bewirkt worden sind, und Steuermittel, die zum Zusammenwirken mit mindestens den Bilderfassungsmitteln, wenn die Mittel zur Berechnung von Abschüssen ermitteln, dass eine Schwellanzahl und/oder eine Schwelldauer von Abschüssen erreicht oder überschritten worden ist, geeignet und konzipiert sind, aufweist.

8. Vorrichtung nach den Ansprüchen 1 bis 7, **dadurch gekennzeichnet, dass** die Bildanalysemittel zum Analysieren einer bestimmten und begrenzten Zone (7), die sich um die zentrale Ausgangsöffnung (11) der Düse (1) herum befindet, insbesondere einer Zone oder eines Bereichs kreis- oder ringförmiger Gestalt (7), konzipiert und geeignet sind.

9. Verfahren zum Ermitteln der relativen Positionierung einer Laserdüse (1) bezüglich der Achse (A-A) eines die Düse (1) durchquerenden Laserstrahls, wobei die Düse (1) mit einer zentralen Ausgangsöffnung (11) versehen ist, durch die der Bearbeitungslaserstrahls (8) passieren kann, und an einem Bearbeitungskopf (10) einer Laserstrahlbearbeitungsvorrichtung, insbesondere einer Laserschneid- oder -schweißvorrichtung, insbesondere nach einem der Ansprüche 1 bis 8, vorgesehen ist, bei dem man
a) ein Bild erfasst,
b) einen Justierlaserstrahl durch die Öffnung (11) der Düse (1) passieren lässt, wobei der Justierlaserstrahl (4) eine geringere Leistung aufweist als der Bearbeitungslaserstrahl (8), aber koaxial zu dem Bearbeitungslaserstrahl verläuft,
**dadurch gekennzeichnet, dass** man bei
Schritt a) mindestens ein erstes Bild des äußeren Bereichs der Düse (1) an der Ausgangsöffnung (11) der Düse (1) erfasst, wenn kein Laserstrahl die Öffnung (11) der Düse (1) durchquert, und dass man bei dem Verfahren
c) mindestens ein zweites Bild des äußeren Bereichs der Düse (1) an der Ausgangsöffnung (11) der Düse (1) und eines Laserflecks (9), der mittels des bei der Bilderfassung die Öffnung (11) der Düse (1) durchquerenden Justierlaserstrahls (4) erhalten wird, erfasst,
d) mindestens das erste und das zweite bei den Schritten a) und c) erfasste Bild verarbeitet, um eine oder mehrere geometrische Eigenschaften zu ermitteln, die die relative Position der Düse (1) bezüglich der des Laserflecks (9) bestimmen,
e) die geometrische(n) Eigenschaft(en), die die relative Position der Düse (1) darstellt (darstellen), mit denen, die die Position des Laserflecks (9) darstellen, in einer horizontalen Ebene und entlang der die Mitte der Düse (1) durchquerenden vertikalen Achse vergleicht,
f) aus Schritt e) eine Information über die relative Positionierung der Düse (1) bezüglich des Laserstrahls (4, 8) mit der Achse (A-A), der die Öffnung (11) der Düse (1) durchquert, ableitet.

10. Verfahren nach Anspruch 9, **dadurch gekennzeichnet, dass** man in Schritt e) mindestens eine geometrische Eigenschaft unter den Durchmessern des Laserflecks (9) und der Düse (1) oder der Düsenöffnung (11), den Mitten des Laserflecks (9) und der Düsenöffnung (11) oder den Oberflächen des Laserflecks und der Düse oder der Düsenöffnung, vorzugsweise den Mitten des Laserflecks und der Düsenöffnung, auswählt.

11. Verfahren nach einem der Ansprüche 9 oder 10, **dadurch gekennzeichnet, dass** man in Schritt f) bestimmt, dass die Düse (1) bezüglich der Achse (A-A) des die Düse (1) durchquerenden Laserstrahls zentriert ist, wenn die Mitten des Laserflecks (9) und der Düsenöffnung (11) zusammenfallen.

12. Verfahren nach einem der Ansprüche 9 bis 11, **dadurch gekennzeichnet, dass** man in Schritt f) bestimmt, dass die Düse (1) bezüglich der Achse (A-A) des die Düse durchquerenden Laserstrahls (4, 8) nicht zentriert ist, insbesondere, wenn die Mitten des Laserflecks (9) und der Düsenöffnung (11) verschieden sind, und man eine relative Neuzentrierung der Düse (1) bezüglich der Achse des Lasers durchführt und/oder den Bediener benachrichtigt.

13. Verfahren nach einem der Ansprüche 9 bis 12, **dadurch gekennzeichnet, dass** man die Anzahl und/oder die Dauer von Laserabschüssen, die mittels der Laserdüse durchgeführt worden sind, berechnet und mit Schritt a) beginnt, wenn die Anzahl und/oder die Dauer von durchgeführten Laserabschüssen eine Schwellanzahl und/oder eine Schwelldauer eines gegebenen Laserabschusses erreicht oder überschreitet.

14. Verfahren nach einem der Ansprüche 9 bis 13, **dadurch gekennzeichnet, dass** es einen Schritt der Anzeige mindestens eines Bildes des Bereichs der Düsenöffnung (11) auf einem Bildschirm (6) und/oder einer Zentrierungsüberprüfungsmeldung umfasst.
